# EUROPÄISCHE PATENTSCHRIFT

(11) **EP 1 345 725 B1**
(45) Veröffentlichungstag und Bekanntmachung des Hinweises auf die Patenterteilung: **10.05.2006**
(21) Anmeldenummer: 01271273.3
(22) Anmeldetag: 02.11.2001
(51) Int. Cl.: B23D 61/12

(54) **SÄGEBLATT**
SAW BLADE
LAME DE SCIE

(30) Priorität: 20.12.2000 DE 10063567
(43) Veröffentlichungstag der Anmeldung: 24.09.2003
(73) Patentinhaber: Schintilla AG, 4501 Solothurn (CH)
(72) Erfinder: KOCHER, Martin, CH-4500 Solothurn (CH); GROLIMUND, Daniel, CH-4528 Zuchwil (CH); KARLEN, Urs, CH-3922 Stalden (CH)
(86) Internationale Anmeldenummer: PCT/EP2001/012687
(87) Internationale Veröffentlichungsnummer: WO 2002/049793

(56) Entgegenhaltungen:
- EP-A- 1 009 600
- DE-A- 19 501 019
- FR-A- 2 447 791
- US-A- 2 071 618
- US-A- 3 292 674
- US-A- 4 557 172
- PATENT ABSTRACTS OF JAPAN vol. 2000, no. 13, 5. Februar 2001 (2001-02-05) -& JP 2000 271817 A (AMADA CO LTD), 3. Oktober 2000 (2000-10-03)

## Beschreibung

### Stand der Technik

Die Erfindung geht aus von einem Sägeblatt, insbesondere für Metallanwendungen, nach dem Oberbegriff des Anspruchs 1.

Ein solches Sägeblatt ist aus JP2000-271817 bekannt.

Um unterschiedliche Materialien mit einer Säge bearbeiten zu können, sind verschiedene Sägeblätter mit anwendungsbezogenen Verzahnungen bekannt, wie z.B. mit einer konstanten Zahnteilung und/oder einer Varioverzahnung usw. Eine Varioverzahnung besitzt unterschiedliche Zahnteilungen.

Aus der JP 2000-271817 ist ein Sägeblatt mit zwei abwechselnd angeordneten unterschiedlichen Zahnteilungen bekannt. Außerdem ist aus diesem Dokument bekannt, Zähne durch Schränken quer zur Schneidbewegungsrichtung auszulenken.

Die Druckschrift DE 195 01 019 A1 beschreibt ein Sägeblatt mit konstanter Zahnteilung und mit Zähnen, die unterschiedliche Zahnformen aufweisen. Es werden Standardzähne, Buckel-und Dachzähne beschrieben. Die Buckelzähne mit stark gerundetem Zahnrücken oder die Dachzähne werden als stützende Zähne verwendet. Die Standardzähne mit geradlinigem Zahnrücken oder die Buckelzähne, die einen Zahnrücken mit einer kleinen Steigung aufweisen, werden dagegen als aggressiv schneidende Zähne verwendet.

Werden die Zahnformen abwechselnd angeordnet, können die aggressiv schneidenden Zähne durch die Buckel- oder Dachzähne gestützt werden, und es kann verhindert werden, daß die aggressiv schneidenden Zähne durch starke Belastungen ausbrechen.

Die abwechselnden Zahnformen können durch Wellen des Sägeblatts oder durch Schränken quer zum Sägeblatt ausgelenkt sein. Durch das Wellen oder Schränken entsteht eine Schnittbreite, die größer ist als die Stärke des Sägeblatts. Ein Verkanten und Verklemmen des Sägeblatts kann vermieden und das Schnittverhalten kann verbessert werden.

### Vorteile der Erfindung

Die Erfindung geht aus von einem Sägeblatt, insbesondere für Metallanwendungen, mit einer Verzahnung, die zumindest eine erste und eine zweite Grundzahnteilung aufweist, wobei in zumindest einem Teilbereich mit drei aufeinanderfolgenden Grundzahnteilungen die erste und die zweite Grundzahnteilung stets abwechselnd direkt hintereinander angeordnet sind und stets zwei Zähne als Einheit durch Wellen und/oder durch Schränken quer zur Schneidbewegungsrichtung ausgelenkt sind.

Es wird erfindungsgemäß vorgeschlagen, daß in der Einheit ein Dach- oder Buckelzahn entgegen der Schneidbewegungsrichtung vor einem Standardzahn angeordnet ist. Es kann eine vorteilhafte Stützwirkung für aggressiv schneidende Zähne, ein hoher Abtrag über der Schnittbewegung und insbesondere eine vorteilhafte Spanabfuhr durch die größere Grundzahnteilung erreicht werden. Ein Ausbrechen von Zähnen kann verhindert und es kann eine hohe Lebensdauer erzielt werden.

Ferner wird vorgeschlagen, daß die Verzahnung zumindest zwei Zahnformen aufweist, und zwar insbesondere eine aggressiv schneidende Zahnform und eine stützende Zahnform, wobei der aggressiv schneidende Zahn vorteilhaft von einem Standardzahn und der stützende Zahn von einem Dach- oder Buckelzahn gebildet ist. Die Stützwirkung kann gegenüber einer Verzahnung mit nur einer Zahnform verbessert werden, und zwar indem mit dem stützenden Zahn der aggressiv schneidende Zahn gestützt wird. Bei starken Belastungen kann der stützende Zahn große Kräfte aufnehmen, und es kann verhindert werden, daß der aggressiv schneidende Zahn ausbricht. Insbesondere ergibt sich eine vorteilhafte Stützwirkung, wenn entgegen einer Schneidbewegungsrichtung nach der größeren Grundzahnteilung ein Dach-oder Buckelzahn und nach der kleineren Grundzahnteilung ein Standardzahn angeordnet ist.

Bei zwei verschiedenen Grundzahnteilungen und bei zwei verschiedenen Zahnformen werden vorteilhaft zwei Zähne als eine Einheit gesehen und durch Wellen und/oder Schränken quer zur Schneidbewegungsrichtung ausgelenkt. Durch das Wellen oder Schränken entsteht eine Schnittbreite, die größer ist als die Stärke des Sägeblatts. Ein Verkanten und Verklemmen des Sägeblatts kann vermieden und das Schnittverhalten kann verbessert werden. Ferner kann insbesondere einfach erreicht werden, daß der Dach- oder Buckelzahn entgegen der Schneidbewegungsrichtung stets schützend vor dem Standardzahn angeordnet werden kann. Ein vorteilhaftes Schnitt- und Führungsverhalten hat sich insbesondere gezeigt, wenn nach zwei in entgegengesetzte Richtungen ausgelenkten Einheiten eine unausgelenkte Einheit folgt.

Die Verzahnung kann auch in weiteren Variationen, die dem Fachmann als sinnvoll erscheinen, geschränkt oder gewellt werden. Beispielsweise können ausschließlich die Dach- oder Buckelzähne quer zur Schneidbewegungsrichtung nach links und rechts durch Wellen und/oder Schränken ausgelenkt und die Standardzähne unausgelenkt, gerade auf dem Sägeblatt angeordnet werden.

Ferner wird vorgeschlagen, daß ein Mittelwert der ersten und der zweiten Grundzahnteilung im wesentlichen einer Standardzahnteilung entspricht. Es kann die Schnittleistung und die Lebensdauer eines erfindungsgemäßen Sägeblatts besonders einfach mit einem Standardsägeblatt verglichen werden. Besonders vorteilhaft ist eine Grundzahnteilung, deren Abweichung ±10% bis ±30% von einer Standardzahnteilung beträgt. Wird z.B. die erste Grundzahnteilung, ausgehend von einer üblichen Standardzahnteilung, um 10% erhöht, wird die zweite Grundzahnteilung um 10% erniedrigt. Die Grundzahnteilungen können auch mit unterschiedlichen Prozentabweichungen ausgeführt werden.

Erfolgt die Grundzahnteilung des Sägeblatts in Richtung der Schneidbewegung mit einer progressiv zunehmenden ersten und zweiten Grundzahnteilung, kann erreicht werden, daß Materialien mit unterschiedlichen Materialstärken vorteilhaft bearbeitet werden können.

Die erfindungsgemäße Lösung kann bei verschiedenen, dem Fachmann als sinnvoll erscheinenden Sägeblättern für unterschiedliche Anwendungsbereiche und Materialien angewendet werden, wie beispielsweise bei Kreissägeblättern, Stichsägeblättern usw., die sowohl manuell als auch maschinell angetrieben sein können. Besonders vorteilhaft ist die erfindungsgemäße Lösung jedoch anwendbar bei in Werkzeugmaschinen oder Handwerkzeugmaschinen verwendeten, hochbelasteten Sägeblättern, und zwar insbesondere bei Sägeblättern für Metallanwendungen.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine handgeführte, elektrisch betriebene Stichsäge mit einem eingelegten Sägeblatt,
- Fig. 2: das Sägeblatt aus Fig. 1 in demontiertem Zustand,
- Fig. 3: einen vergrößerten Ausschnitt III aus Fig. 2 und
- Fig. 4: eine Draufsicht auf eine Verzahnung des Sägeblatts aus Fig. 2.

### Beschreibung des Ausführungsbeispiels

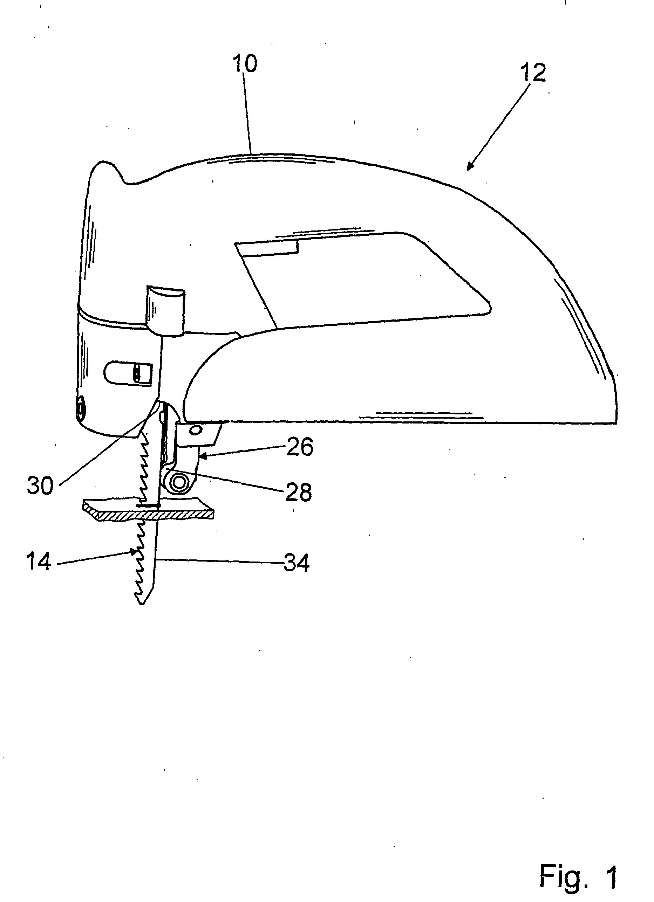

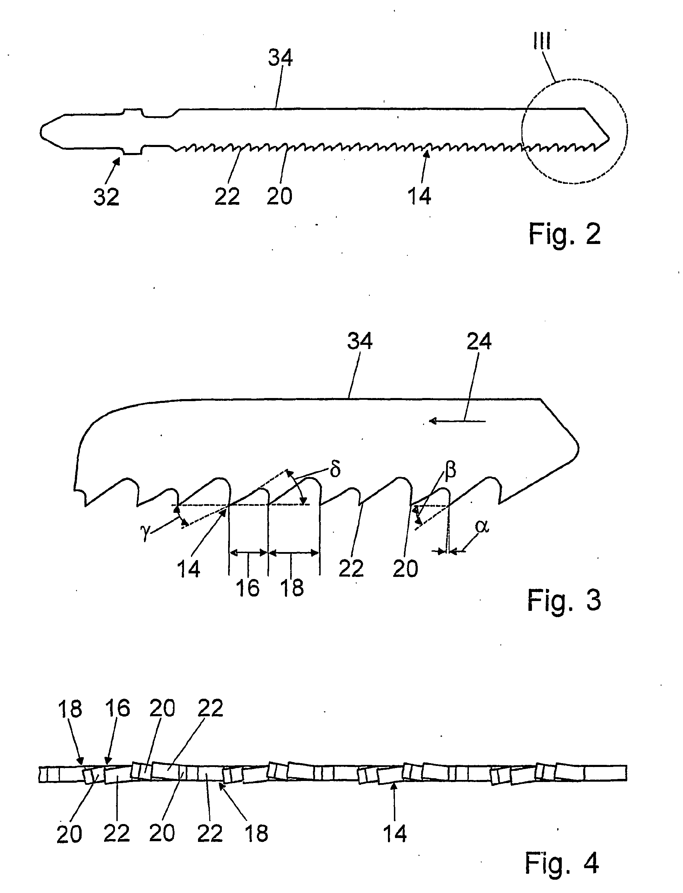

Fig. 1 zeigt eine handgeführte Stichsäge 12 mit einem in einem Gehäuse 10 nicht näher dargestellten Elektromotor. Ein Sägeblatt für Metallanwendungen ist über eine Werkzeughalterung 30 mit dem Elektromotor antriebsmäßig verbunden und ist über eine Führungseinheit 26 mit einer Führungsrolle 28 geführt. An einem Ende des Sägeblatts ist ein Schaft 32 angeformt (Fig. 2), über den das Sägeblatt in der Werkzeughalterung 30 arretierbar ist. Während eines Sägebetriebs wird das Sägeblatt mit einer Hubbewegung senkrecht zu einer Bearbeitungsrichtung hin- und hergehend bewegt. Das Sägeblatt ist mit seinem Sägeblattrücken 34 entgegen der Bearbeitungsrichtung an der Führungsrolle 28 abgestützt und wird quer zur Bearbeitungsrichtung in einer Nut der Führungsrolle 28 geführt.

Das Sägeblatt besitzt eine Verzahnung 14 mit einer ersten Grundzahnteilung 16 und einer zweiten Grundzahnteilung 18, wobei die erste Grundzahnteilung 16 kleiner ist als die zweite Grundzahnteilung 18 (Fig. 3). Die Grundzahnteilungen 16, 18 sind stets abwechselnd direkt hintereinander angeordnet. Die Verzahnung 14 weist zwei verschiedene Zahnformen auf, und zwar die von einem Dachzahn 20 und die von einem Standardzahn 22.

Der Dachzahn 20 ist als Stützzahn ausgebildet und ist entgegen einer Schneidbewegungsrichtung 24 stets nach der größeren Grundzahnteilung 18 angeordnet. Der aggressiv schneidende Standardzahn 22 folgt stets nach der kleineren Grundzahnteilung 16.

Periodisch sind Einheiten mit zwei Zähnen 20, 22 durch Schränken quer zur Schneidbewegungsrichtung 24 ausgelenkt, Wobei nach zwei in entgegengesetzter Richtung ausgelenkten Einheiten eine unausgelenkte Einheit folgt (Fig. 4). Wird das Sägeblatt entgegen der Schneidbewegungsrichtung 24 betrachtet, ist der Dachzahn 20 je Einheit vor dem Standardzahn 22 angeordnet (Fig. 3 und 4).

Ein Mittelwert der ersten und der zweiten Grundzahnteilung 16, 18 entspricht einer Standardzahnteilung von 1,81 mm. Die größere Grundzahnteilung 18 ist 10% größer und die kleinere Grundzahnteilung 16 ist 10% kleiner als 1,81 mm ausgeführt. Sämtliche Zähne 20, 22 besitzen einen Spanwinkel α von 5°. Die Standardzähne 22 besitzen einen Freiwinkel β von 35°. Die Dachzähne 20 besitzen einen entgegen der Schneidbewegungsrichtung 24 betrachteten vorderen Freiwinkel γ von 23° und einen hinteren Freiwinkel δ von 33°. Es sind auch andere, dem Fachmann als sinnvoll erscheinende Winkelwerte möglich, die bezogen auf das zu bearbeitende Material oder in Kombination mit einer anderen Grundzahnteilung wählbar sind.

### Bezugszeichen

- 10: Gehäuse
- 12: Werkzeugmaschine
- 14: Verzahnung
- 16: Grundzahnteilung
- 18: Grundzahnteilung
- 20: Dachzahn
- 22: Standardzahn
- 24: Schneidbewegungsrichtung
- 26: Führungseinheit
- 28: Führungsrolle
- 30: Werkzeughalterung
- 32: Schaft
- 34: Sägeblattrücken
- α: Spanwinkel
- β: Freiwinkel
- γ: Freiwinkel
- δ: Freiwinkel

## Patentansprüche

1. Sägeblatt, insbesondere für Metallanwendungen, mit einer Verzahnung (14), die zumindest eine erste Grundzahnteilung (16) und eine zweite Grundzahnteilung (18) aufweist, wobei in zumindest einem Teilbereich mit drei aufeinanderfolgenden Grundzahnteilungen (16, 18) die erste und die zweite Grundzahnteilung (16, 18) stets abwechselnd direkt hintereinander angeordnet sind und stets zwei Zähne (20, 22) als Einheit durch Wellen und/oder durch Schränken quer zur Schneidbewegungsrichtung (24) ausgelenkt sind, **dadurch gekennzeichnet, daß** in der Einheit ein Dach- (20) oder Buckelzahn entgegen der Schneidbewegungsrichtung (24) vor einem Standardzahn (22) angeordnet ist.

2. Sägeblatt nach Anspruch 1, **dadurch gekennzeichnet, daß** entgegen einer Schneidbewegungsrichtung (24) nach der größeren Grundzahnteilung (18) ein Dach- (20) oder Buckelzahn und nach der kleineren Grundzahnteilung (16) ein Standardzahn (22) angeordnet ist.

3. Sägeblatt nach Anspruch 1 oder 2, **dadurch gekennzeichnet, daß** nach zwei in entgegengesetzte Richtungen ausgelenkten Einheiten eine unausgelenkte Einheit folgt.

4. Sägeblatt nach einem der vorhergehenden Ansprüche, **dadurch gekennzeichnet, daß** ein Mittelwert der ersten und der zweiten Grundzahnteilung (16, 18) im wesentlichen einer Standardzahnteilung entspricht.

5. Sägeblatt nach einem der vorhergehenden Ansprüche, **dadurch gekennzeichnet, daß** die erste und die zweite Grundzahnteilung progressiv ausgeführt sind.

## Claims

1. Saw blade, in particular for metal applications, having a tooth system (14) which has at least a first basic tooth spacing (16) and a second basic tooth spacing (18), the first and the second basic tooth spacing (16, 18), at least in a section having three successive basic tooth spacings (16, 18), always being arranged alternately directly one behind the other, and two teeth (20, 22) always being deflected as a unit transversely to the cutting movement direction (24) by a wavy set and/or by a side set, **characterized in that** a roof tooth (20) or hump tooth is arranged in the unit in front of a standard tooth (22) against the cutting movement direction (24).

2. Saw blade according to Claim 1, **characterized in that**, against a cutting movement direction (24), a roof tooth (20) or hump tooth is arranged after the larger basic tooth spacing (18) and a standard tooth (22) is arranged after the smaller basic tooth spacing (16).

3. Saw blade according to Claim 1 or 2, **characterized in that** a non-deflected unit follows after two units deflected in opposite directions.

4. Saw blade according to one of the preceding claims, **characterized in that** an average value of the first and the second basic tooth spacing (16, 18) corresponds essentially to a standard tooth spacing.

5. Saw blade according to one of the preceding claims, **characterized in that** the first and the second basic tooth spacing are designed to be progressive.

## Revendications

1. Lame de scie, en particulier pour applications métalliques, comprenant une denture (14) qui présente au moins un premier pas de denture de base (16) et un deuxième pas de denture de base (18), le premier et le deuxième pas de denture de base (16, 18) étant disposés toujours en alternance directement l'un derrière l'autre, au moins dans une zone partielle comprenant trois pas de denture de base (16, 18) successifs, et deux dents (20, 22) étant toujours orientées transversalement par rapport à la direction du mouvement de coupe (24) en tant qu'unité par des courbes et/ou par des pointes,
**caractérisée en ce que**
dans l'unité, une dent couchée (20) ou à bosse est disposée à l'encontre de la direction du mouvement de coupe (24), devant une dent standard (22).

2. Lame de scie selon la revendication 1,
**caractérisée en ce qu'**
à l'encontre de la direction du mouvement de coupe (24), une dent couchée (20) ou à bosse se trouve après le pas de denture de base (18) le plus grand, et une dent standard (22) se trouve après le pas de denture de base (16) le plus petit.

3. Lame de scie selon la revendication 1 ou 2,
**caractérisée en ce qu'**
une unité non orientée suit deux unités orientées dans des directions opposées.

4. Lame de scie selon l'une des revendications précédentes,
**caractérisée en ce qu'**
une valeur moyenne du premier et du deuxième pas de denture de base (16, 18) correspond pour l'essentiel à un pas de denture standard.

5. Lame de scie selon l'une des revendications précédentes,
**caractérisée en ce que**
le premier et le deuxième pas de denture de base sont réalisés progressivement.
